# EUROPÄISCHE PATENTANMELDUNG

(11) **EP 4 706 957 A1**
(43) Veröffentlichungstag der Anmeldung: **11.03.2026**
(21) Anmeldenummer: 24198765.0
(22) Anmeldetag: 05.09.2024
(51) Int. Cl.: B32B 23/08, B32B 27/10, B32B 27/36

(54) **PORTIONSKAPSEL FÜR GETRÄNKE**

(71) Anmelder: Jura-Plast GmbH, 91244 Reichenschwand (DE)
(72) Erfinder: Müller, Jürgen, 91244 Reichenschwand (DE)
(74) Vertreter: Simandi, Claus

(57) **Zusammenfassung**

Die vorliegende Erfindung betrifft eine Portionskapsel für Getränke, sogenannte Kaffeekapseln, mit einer becherförmigen Schal mit hervorragenden Barriere-Eigenschaften gegen Gaseintritt, Wasser bzw. Luftfeuchtigkeit und Sauerstoff aufweisend:
i.) mindestens eine Schicht eines Papiers,
ii.) mindestens eine Schicht einer Metallisierung,
iii.) mindestens eine Schicht enthaltend Polymilchsäure,
iv.) mindestens eine Siegelschicht enthaltend mindestens einen thermoplastischen Kunststoff, der aus Glukose, Lignin oder Cellulose hergestellt ist.

## Beschreibung

Die vorliegende Erfindung betrifft eine Portionskapsel für Getränke, bzw. Getränkekapseln, insbesondere Kaffeekapseln, mit einer becherförmigen Schale. Portionskapseln für Getränke, insbesondere Kaffee, sind aus dem Stand der Technik bekannt. Die becherförmige Schale ist bevorzugt kegelstumpfförmig oder zylindrisch geformt und weist einen Boden und eine Mantelfläche auf. Sie wird beispielsweise aus einer tiefgezogenen Kunststofffolie oder im Kunststoffspritzverfahren hergestellt. An einer dem Boden gegenüberliegenden Seite ist eine Füllöffnung und ein die Füllöffnung umgebender Siegelrand vorgesehen, auf welchen nach einem Befüllen der Portionskapsel eine Deckelfolie oder Lidfolie aufgebracht, bzw. gesiegelt wird..

Weit verbreitet sind Kapseln zum portionsweisen Aufbrühen von Getränken wie Kaffee oder Tee. Die Kapseln bestehen aus einem becherartigen Grundkörper und einer Lid- oder Deckelfolie, die den Grundkörper fest verschließt. Die Kapseln sind dafür ausgebildet, mit der Lidfolie in einen entsprechenden Zubereitungsautomaten eingelegt zu werden. Für die Zubereitung wird die Kapsel mit Lidfolie gestochen. In dem Automaten zubereitetes, heißes Wasser wird vorzugsweise mit Druck in die Kapsel gegeben. Das heiße Getränk, z. B. gebrühter Kaffee, kann nun durch die gestochenen Löcher in der Lidfolie ausfließen.

Es besteht ein hohes Bedürfnis an Getränkekapseln, welche eine hohe Siegelfähigkeit bzw. hervorragende Barriere-Eigenschaften aufweisen und zugleich nachhaltig entsorgt werden können.

Es ist Aufgabe der vorliegenden Erfindung eine Portionskapsel für Getränke aus einem abbaubaren, kompostierbaren oder heimkompostierbaren Verbundmaterial bereitzustellen, die den Gasstoffeintritt noch besser verhindert.

Erfindungsgemäß ist eine Portionskapsel für Getränke vorgesehen, aufweisend ein kompostierbares oder heimkompostierbares Verbundmaterial, welches aus mehreren Schichten aufgebaut ist, und auf diese Weise eine vollständige Siegelfähigkeit aufweist.

Daher betrifft die Erfindung eine Portionskapsel für Getränke umfassend ein Verbundmaterial,
von außen nach innen mehrere Schichten,
i.) mindestens eine Schicht eines Papiers,
ii.) mindestens eine Schicht einer Metallisierung,
iii.) mindestens eine Schicht enthaltend Polymilchsäure,
iv.) mindestens eine Siegelschicht enthaltend mindestens einen thermoplastischen Kunststoff, der aus Glukose, Lignin oder Cellulose hergestellt ist.

In einer bevorzugten Ausführungsform können die Schichten zumindest zwischen i.) und ii.) mit einem Kaschierkleber versehen sein. Bevorzugt ist, dass der Kaschierkleber ein Gewicht von 2 - 6 g / qm aufweist.

Weiterhin ist optional vorgesehen, dass das Verbundmaterial zur Verstärkung der Barriere-Eigenschaften zwischen Schicht i.) und ii.) mindestens eine weitere Schicht aus Polyvinylalkohol aufweist (ia.), vorzugsweise mit einem Gewicht von 2 - 6 g / qm, vorzugsweise eine bis drei Schichten (ia - ic.) Polyvinylalkohol jeweils mit einem Gewicht von 2 - 6 g / qm.

In einer bevorzugten Ausführungsform kann die Schicht i.) eine Grammatur von 75 g /qm bis 200 g /qm aufweisen, insbesondere 130 - 170 g/ qm, insbesondere 150 g/ qm. Papier im Sinne dieser Erfindung ist ein dünnes Material, das im Wesentlichen aus Pflanzenfasern hergestellt wird.

In einer weiteren bevorzugten Ausführungsform kann die Schicht iii.) mindestens ein weiteres aliphatischen-aromatischen Copolyester enthalten, insbesondere Polybutylenadipat-Terephthalat (PBAT) (ecoflex^{®} BASF), der gemäß EN 13432 kompostierbar ist.

Besonders bevorzugt sind solche der BASF mit dem Handelsnamen ecovio ^{®} auf der Basis von Polymilchsäure, welche gemäß EN 13432 kompostierbar sind.

Bevorzugt ist, dass die Schicht iii.) ein maximales Elastizitätsmodul von 100 bis 300 MPa gemäß ISO 527 aufweist. Weiterhin ist bevorzugt, dass die maximale Streckspannung oder Zugspannung 45 MPa, insbesondere 35 bis 40 MPa gemäß ISO 527 beträgt.

Weiterhin ist bevorzugt ein MVR (190 Grad Celsius / 5 kg) von 8-12 cm³/10 min gemäß ISO 1133.

In einer weiteren bevorzugten Ausführungsform kann die Schicht iii.) aus mehreren solchen Schichten bestehen, insbesondere zwei oder drei Schichten, wobei jede Schicht

Polymilchsäure enthält, oder zusätzlich mindestens ein weiteres aliphatisches-aromatisches Copolyester enthält.

In der Schicht iii.) können zusätzlich neben Polymilchsäure (PLA) weitere Biopolymere enthalten sein, wie modifizierte Polymilchsäure, Polymilchsäure-Copolymere, Polyhydroxyalkanoate (PHA), Polycaprolacton (PCL).

Beispiele für PLA-Copolymere sind Copolymere mit Polyestern, z. B. aliphatischen Polyestern (CPLA).

Bevorzugt sind biologisch abbaubare Kunststoffe auf Polylactidbasis, wie modifiziertes Polylactid, Polylactid-Copolymere, Alpha-Hydroxysäuren wie z. B. Poly-(Lactid-co-Glykolid) (PLGA), Polyanhydride, aliphatische Polyester, Copolyester mit aliphatischen und aromatischen Blöcken, Polyesteramid, Polyesterurethan, ein Polyethylenoxidpolymer, ein Polyglycol und Copolymere davon.

Die Schicht iii.) kann eine Dicke von 10 - 50 µm aufweisen, insbesondere 10 - 30 µm.

In einer weiteren bevorzugten Ausführungsform kann gemäß Schicht ii.) das Metall ausgewählt sein aus Bor, Aluminium oder Silizium, insbesondere Boroxid, Aluminiumoxid oder Siliziumoxid.

In einer weiteren bevorzugten Ausführungsform kann Schicht ii.) eine Dicke von 20 - 50 nm, insb. 30 - 40 nm aufweisen. Die Metallisierung erfolgt mittels Aufdampfen auf die Schicht iii.).

In einer weiteren bevorzugten Ausführungsform kann Schicht iii.) zusätzlich ein Coating aus Acrylat enthalten.

In einer weiteren bevorzugten Ausführungsform kann das Coating aus Acrylat eine Dicke von 20 - 40 nm zusätzlich auf der der Schicht iii.) aufweisen. Das Coating erlaubt einen vorteilhaften Schutz und Fixierung der Metallisierung in Schicht ii.).

Mindestens ein Acrylat kann ausgewählt sein aus der Gruppe Polyurethan-, Polyester-, Epoxy- und Polyether-acrylate oder -methaacrylate, insbesondere Oligomere, und / oder Monomere ausgewählt aus der Gruppe mono-, di-, tri-, tetra- und hexafunktionelle Acrylate oder Methaacrylate.

Weiterhin ist bevorzugt, dass die Schicht der Metallisierung ii.) - an der Schicht iii.) - ein Gewicht von 0,1 bis 0,15 g/qm aufweist und/oder das Acrylat ein Gewicht von 0,04 bis 0,06 g/qm aufweist.

In einer weiteren bevorzugten Ausführungsform kann die Siegelschicht iv.) mindestens einen thermoplastischen Kunststoff enthalten, der aus Glukose, Lignin oder Cellulose hergestellt ist, der vorzugsweise gemäß EN 13432 kompostierbar ist. Weiterhin kann die Siegelschicht iv.) Biopolymere enthalten, wie nicht abschließend Polyhydroxyalkanoaten (PHA), Polycaprolacton (PCL), Polyester (PET), Stärke, Polymilchsäure (PLA), Polyolefinen (PE), Polyamiden (PA).

Bevorzugt ist, dass die Siegelschicht iv.) ein maximales Elastizitätsmodul von 3000 oder 4000 bis 4500 MPa gemäß ISO 527 aufweist (Messung des Elastizitätsmoduls mit einer Prüfgeschwindigkeit von 1 mm/min). Weiterhin ist bevorzugt, dass die maximale Streckspannung oder Zugspannung von 40 bis 60 MPa, insbesondere 55 oder 54 MPa gemäß ISO 527 beträgt.

Weiterhin ist bevorzugt ein MVR (190 Grad Celsius / 2,16 kg) von 3-5 cm³/10 min gemäß ISO 1133.

In einer Ausführungsform ist bevorzugt, eine Siegelschicht iv.) aus einer Polymermischung, und zwar enthaltend
a.) 70 - 95 Gew. % aus mindestens einem thermoplastischen Kunststoff, der aus Glukose, Lignin oder Cellulose hergestellt ist, aufweisend ein Elastizitätsmodul von 4000 - 4400 MPa und einer Streckspannung oder Zugspannung von 50 - 60 MPa nach ISO 527, und
b.) 5 - 30 Gew. % aus mindestens einem thermoplastischen Kunststoff, der aus Glukose, Lignin oder Cellulose hergestellt ist, aufweisend ein Elastizitätsmodul von 200 - 400 MPa und einer Streckspannung oder Zugspannung von 10 - 20 MPa nach ISO 527

Weiterhin ist bevorzugt, eine Polymermischung von a.) / b.) von 85 Gew % : 15 Gew. %.

Weiterhin ist bevorzugt, dass a.) einen MVR (190 Grad Celsius / 2,16 kg) von 3 cm³/10 min gemäß ISO 1133 aufweist und b.) einen MVR (190 Grad Celsius / 2,16 kg) von 6 cm³/10 min gemäß ISO 1133 aufweist.

Zudem können a.) und b.) Biopolymere enthalten, wie Polyhydroxyalkanoaten (PHA), Polycaprolacton (PCL), Polyester (PET), Stärke, Polymilchsäure (PLA), Polyolefinen (PE), Polyamiden (PA).

Solche Polymermischungen sind bei der Firma Tecnaro, Ilsfeld, Deutschland erhältlich. z.B. Abroblend ^{®}.

Insbesondere die Siegelschicht erlaubt eine vorteilhafte mechanische Festigkeit der Getränkekapsel mit einem optimalen Innendruck.

In einer weiteren bevorzugten Ausführungsform kann die Siegelschicht iv.) aus mehreren solchen Schichten bestehen, insbesondere zwei oder drei Schichten, wobei jede Schicht mindestens einen weiteren thermoplastischen Kunststoff enthält, der aus Glukose, Lignin oder Cellulose hergestellt ist, die gemäß EN 13432 kompostierbar ist.

Die Siegelschicht iv.) kann eine Dicke von 5 - 15 µm aufweisen, insbesondere 10 µm.

Daher betrifft die Erfindung ebenfalls eine Getränkekapsel oder eine Portionskapsel für Getränke, wobei die Getränkekapsel mindestens ein erfindungsgemäßes Verbundmaterial enthält.

Insgesamt verwirklicht die vorliegende Erfindung eine kompostierbare oder heimkompostierbare Getränkekapsel gemäß der Europäischen Norm (EN) 13432.

Weiterhin ist bevorzugt, dass die Getränkekapsel eine Deckelfolie oder Lidfolie aufweist, wie z.B. in EP 24 186 396.8 der Anmelderin beschrieben.

Die Schicht aus Papier gemäß i.) bildet die nach Außen weisende Schicht der erfindungsgemäßen Getränkekapsel.

Zum Schutz des Inhalts des Behältnisses weisen die erfindungsgemäßen Schichten in ihrer gewählten Anordnung optimale Barriere-Eigenschaften für Sauerstoff und Wasserdampf auf und erreichen daher hervorragende Siegeleigenschaften. Die erfindungsgemäßen Barriereschichten weisen eine geeignete Sperrwirkung für Sauerstoff und Wasserdampf auf.

Für die Herstellung der Getränkekapsel wird die jeweilige Schicht mithilfe eines vorzugsweise biologisch abbaubaren Kaschierklebers laminiert.

Es wird vorzugsweise ein biologisch abbaubarer Kaschierkleber eingesetzt, der lebensmittelverträglich ist. Beispiele sind wässrige Lösungen von Polyvinylalkohol (PVOH), auf Basis von Stärke, Eiweißkleber, oder Polyurethan (Fa. Morchem, München, Deutschland).

Ein weiterer geeigneter biologisch abbaubarer Kaschierkleber ist der wasserbasierte Klebstoff Epotal^{®} Eco der Firma BASF.

Kapseln für Getränke aus biologisch abbaubarem Kunststoff können mittels der in der Kunststofftechnik üblichen Verfahren hergestellt werden.

Es sei darauf hingewiesen, dass Merkmale, die im Zusammenhang mit einer beispielhaften Ausführungsform oder einem beispielhaftem Gegenstand beschrieben werden, mit jeder anderen beispielhaften Ausführungsform oder mit jedem anderen beispielhaften Gegenstand kombiniert werden können.

Wenn ein Begriff mit einem unbestimmten oder bestimmten Artikel, wie zum Beispiel "ein" im Singular bezeichnet wird, schließt dies auch den Begriff im Plural mit ein und umgekehrt, sofern der Kontext nicht eindeutig anderes festlegt.

Der Ausdruck "umfassen", wie er hier verwendet wird, schließt nicht nur die Bedeutung von "enthalten" ein, sondern kann auch "bestehen(d) aus" und "im Wesentlichen bestehend aus" bedeuten.

Die ISO 527 bestimmt das mechanische Verhalten von Kunststoffen unter Zugbelastung. Diese Norm legt die Prüfmethoden für die Bestimmung der Zug-Eigenschaften von Kunststoffen fest.

Die ISO 1133 beschreibt das Verfahren zur Bestimmung der MVR (Melt Volume Rate, bzw. Schmelzvolumenfließrate) sowie der MFR (Melt Flow Rate, Schmelzfließrate), welche die Masse des durch die Düse extrudierten Kunststoffs in Gramm pro 10 Minuten (g/10 min) angibt. Die MVR gibt an, wie viel Volumen eines Kunststoffes in einem bestimmten Zeitraum unter festgelegten Bedingungen durch eine definierte Düse extrudiert wird. Die MVR wird in Kubikzentimetern pro 10 Minuten (cm³/10 min) angegeben.

## Patentansprüche

1. Portionskapsel für Getränke umfassend,
von außen nach innen mehrere Schichten,
i.) mindestens eine Schicht eines Papiers,
ii.) mindestens eine Schicht einer Metallisierung,
iii.) mindestens eine Schicht enthaltend Polymilchsäure,
iv.) mindestens eine Siegelschicht enthaltend mindestens einen thermoplastischen Kunststoff, der aus Glukose, Lignin oder Cellulose hergestellt ist.

2. Portionskapsel für Getränke nach Anspruch 1 aufweisend,
mindestens einen Kaschierkleber zwischen i.) und ii.) mit einem Gewicht von 2-6 g / qm.

3. Portionskapsel für Getränke nach Anspruch 1 oder Anspruch 2, wobei die Schicht iii.) mindestens ein weiteres aliphatisches-aromatisches Copolyester, insbesondere Polybutylenadipat-Terephthalat (PBAT), enthält, der gemäß EN 13432 kompostierbar ist.

4. Portionskapsel für Getränke nach einem der vorhergehenden Ansprüche, wobei die Siegelschicht iv.) mindestens einen weiteren thermoplastischen Kunststoff enthält, der aus Glukose, Lignin oder Cellulose hergestellt ist, der gemäß EN 13432 kompostierbar ist.

5. Portionskapsel für Getränke nach einem der vorhergehenden Ansprüche, wobei i.) eine Grammatur von 75 g /qm bis 200 g /qm aufweisen, insbesondere 130 - 170 g/ qm, insbesondere 150 g/ qm..

6. Portionskapsel für Getränke nach einem der vorhergehenden Ansprüche, wobei gemäß Schicht ii.) das Metall ausgewählt ist aus Bor, Aluminium oder Silizium, insbesondere Boroxid, Aluminiumoxid oder Siliziumoxid.

7. Portionskapsel für Getränke nach einem der vorhergehenden Ansprüche, wobei Schicht ii.) eine Dicke von 20 - 50 nm aufweist.

8. Portionskapsel für Getränke für Getränkekapseln nach einem der vorhergehenden Ansprüche, wobei ii.) zusätzlich ein Coating, insbesondere aus Acrylat enthält.

9. Portionskapsel für Getränke nach Anspruch 8, wobei mindestens ein Acrylat ausgewählt ist aus der Gruppe Polyurethan-, Polyester-, Epoxy- und Polyether-acrylate oder -methaacrylate, insbesondere Oligomere, und / oder Monomere ausgewählt aus der Gruppe mono-, di-, tri-, tetra- und hexafunktionelle Acrylate oder Methaacrylate.

10. Portionskapsel für Getränke nach einem der Ansprüche 8 oder 9, wobei das Coating aus Acrylat eine Dicke von 20 - 40 nm aufweist.

11. Portionskapsel für Getränke nach einem der Ansprüche 1 bis 10, wobei die Schicht der Metallisierung iii.) ein Gewicht von 0,1 bis 0,15 g/qm aufweist und/oder das Acrylat ein Gewicht von 0,04 bis 0,06 g/qm aufweist.

12. Portionskapsel für Getränke nach einem der Ansprüche 1 bis 11, wobei zwischen Schicht i.) und ii.) mindestens eine weitere Schicht aus Polyvinylalkohol enthalten ist, insbesondere mit einem Gewicht von 2 - 6 g / qm.

13. Portionskapsel für Getränke nach einem der Ansprüche 1 bis 12, wobei die Schicht iii.) ein maximales Elastizitätsmodul von 100 bis 300 MPa gemäß ISO 527 aufweist und/oder die maximale Streckspannung oder Zugspannung 45 MPa, insbesondere 35 bis 40 MPa gemäß ISO 527 beträgt und / oder die MVR (190 Grad Celsius / 5 kg) von 8-12 cm³/10 min gemäß ISO 1133 beträgt.

14. Portionskapsel für Getränke nach einem der Ansprüche 1 bis 12, wobei die Siegelschicht iv.) ein maximales Elastizitätsmodul bis 4500 MPa gemäß ISO 527 aufweist, und / oder die maximale Streckspannung oder Zugspannung 40 - 60 MPa, und / oder die MVR (190 Grad Celsius / 2,16 kg) von 3-5 cm³/10 min gemäß ISO 1133 beträgt.
